(19) Europäisches Patentamt
European Patent Office
Office européen des brevets

(11) **EP 3 366 718 B1**

(12) **EUROPEAN PATENT SPECIFICATION**

(45) Date of publication and mention
of the grant of the patent:
**12.02.2020   Bulletin 2020/07**

(21) Application number: **16857439.0**

(22) Date of filing: **18.10.2016**

(51) Int Cl.:
*C08J 3/12* *(2006.01)*      *C08J 3/24* *(2006.01)*

(86) International application number:
**PCT/JP2016/080870**

(87) International publication number:
**WO 2017/069125 (27.04.2017 Gazette 2017/17)**

(54) **CORE-SHELL PARTICLE**

KERN-HÜLLE-PARTIKEL

PARTICULE COEUR-COQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.10.2015   JP 2015209175**

(43) Date of publication of application:
**29.08.2018   Bulletin 2018/35**

(73) Proprietors:
  • **The University Of Tokyo**
    **Tokyo 113-8654 (JP)**
  • **Sumitomo Seika Chemicals Co., Ltd.**
    **Kako-gun, Hyogo 675-0145 (JP)**

(72) Inventors:
  • **TORII, Toru**
    **Tokyo 113-8654 (JP)**

  • **KOMAZAKI, Yusuke**
    **Tokyo 113-8654 (JP)**
  • **SHIMANUKI, Masaya**
    **Tokyo 113-8654 (JP)**
  • **SAWADA, Kohei**
    **Himeji-shi**
    **Hyogo 672-8076 (JP)**
  • **ISHIKURA, Kei**
    **Osaka-shi**
    **Osaka 541-0041 (JP)**

(74) Representative: **Mewburn Ellis LLP**
    **City Tower**
    **40 Basinghall Street**
    **London EC2V 5DE (GB)**

(56) References cited:
**WO-A1-2014/115467      JP-A- 2005 524 753
JP-A- 2008 091 131**

**Description**

TECHNICAL FIELD

The present invention relates to core-shell particles.

BACKGROUND ART

Core-shell particles in which a core part and a shell part are formed of different materials have been used as microcapsules containing specific substances in the core part, and use as multilayer structured particles having functionality imparted to the surface is advanced, and its application field covers a wide range of fields such as pharmaceuticals, cosmetics, foods, electronic materials, adhesives, etc.

As a method for producing the core-shell particle, it is known a method of producing core-shell particles in which a particle serving as a core part is covered with a polymer serving as a shell part by polymerization reaction of a monomer to be a shell part in the presence of particles to be a core part.

Further, in recent years, a method in which by using a glass or metal substrate having a microchannel (micro flow path) with a width and a depth of several μm to several hundred μm (hereinafter may be referred to as a microchip), monodisperse core-shell particles are produced, is also investigated (refer to, for example, Patent Document 1 and Patent Document 2).

PRIOR ART DOCUMENTS

PATENT DOCUMENTS

Patent Document 1: International Publication WO 2002/068104
Patent Document 2: Japanese Patent Laid-open Publication No. 2004-197083

SUMMARY OF THE INVENTION

PROBLEMS TO BE SOLVED BY THE INVENTION

It is a main object of the present invention to provide a novel core-shell particle having excellent flexibility and a conductive particle using the same.

MEANS FOR SOLVING THE PROBLEM

The present inventors made earnest investigations in order to solve the above problems. As a result, it was found that by adopting a specific constitution, it is possible to obtain a novel core-shell particle having excellent flexibility.

Furthermore, it was also found that a conductive particle can be obtained by covering the surface of the core-shell particle with a conductive metal film.

That is, the present invention provides the following core-shell particles and conductive particles.

Item 1. A core-shell particle including a core part and a shell part covering a surface of the core part,
wherein the core part is formed of an elastic body, and
the shell part is formed of a cured product of a composition containing a curing agent and polyimide.
Item 2. The core-shell particle according to item 1, wherein the elastic body is formed of a polymer.
Item 3. The core-shell particle according to item 1 or 2, wherein the core has a diameter of 900 μm or less.
Item 4. The core-shell particle according to any of items 1 to 3, wherein the shell has a thickness of 100 μm or less.
Item 5. The core-shell particle according to any of items 1 to 4, wherein the particle diameter is 1000 μm or less.
Item 6. A conductive particle including a core part, a shell part covering a surface of the core part, and a conductive metal film covering a surface of the shell part,
wherein the core part is formed of an elastic body, and
the shell part is formed of a cured product of a composition containing a curing agent and polyimide.
Item 7. The conductive particle according to item 6, wherein the elastic body is formed of silicone.
Item 8. The conductive particle according to item 6 or 7, wherein a diameter of the core is 900 μm or less.
Item 9. The conductive particle according to any of items 6 to 8, wherein the shell has a thickness of 100 μm or less.

Item 10. The conductive particle according to any of items 6 to 9, wherein a thickness of the conductive metal film is 200 μm or less.

Item 11. The conductive particle according to any of items 6 to 10, wherein a particle diameter is 1200 μm or less.

ADVANTAGES OF THE INVENTION

According to the present invention, it is possible to provide a novel core-shell particle having excellent flexibility. Furthermore, according to the present invention, it is possible to provide a novel conductive particle utilizing the core-shell particle.

BRIEF DESCRIPTION OF THE DRAWINGS

Fig. 1 is a schematic cross-sectional view of a core-shell particle of the present invention.
Fig. 2 is a schematic cross-sectional view of a conductive particle of the present invention.
Fig. 3 is a schematic diagram for explaining a method for producing core-shell particles of the present invention.
Fig. 4 is a schematic diagram of a microchannel formed in a microchip used in examples and comparative examples of the present invention.
Fig. 5 is a photograph of a second confluence point Q of the microchannel taken in Example 2.
Fig. 6 is a photograph of a second confluence point Q of a microchannel taken in Comparative Example 2.
Fig. 7 is another example of a schematic view of a microchannel formed in a microchip used for producing core-shell particles of the present invention.
Fig. 8 is an image obtained by observing core-shell particles before and after compression with a microscope in Example 1.
Fig. 9 is an image obtained by observing core-shell particles before and after compression with a microscope in Comparative Example 1.

EMBODIMENTS OF THE INVENTION

1. Core-Shell Particle

A core-shell particle of the present invention is a core-shell particle including a core part and a shell part covering a surface of the core part. The core part is formed of an elastic body. The shell part is formed of a cured product of a composition containing a curing agent and polyimide.

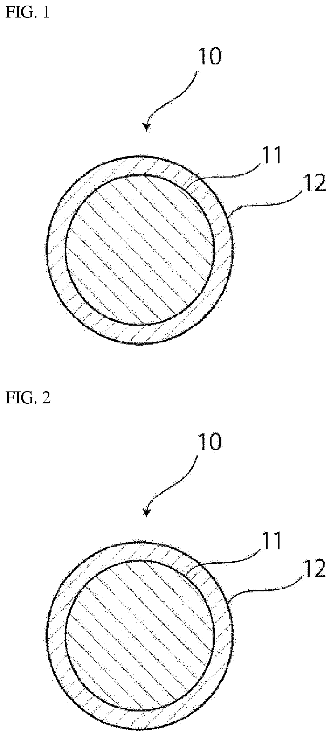

Since the core-shell particle of the present invention includes a core part formed of an elastic body and a shell part formed of a cured product of a composition containing a curing agent and polyimide, the core-shell particle can exert the elasticity by virtue of the core part, and the excellent heat resistance, solvent resistance, insulating properties, mechanical properties, and the like which the polyimide of the shell part has. In addition, since the shell part of the core-shell particle of the present invention is formed of a cured product of a composition containing a curing agent and polyimide, cracks are hardly produced even when stress is applied, and excellent flexibility is exerted. Accordingly, the core-shell particle of the present invention can be suitably used as, for example, an insulating spacer of an electronic device. As described later, it is also possible to form flexible conductive particles by further covering the surface of the core-shell particle with a conductive metal film. Hereinafter, the core-shell particle of the present invention will be described in detail with reference to Fig. 1.

As shown in Fig. 1, a core-shell particle 10 of the present invention includes a core part 11 and a shell part 12 covering the surface of the core part 11.

The core part 11 is formed of an elastic body. A material constituting the elastic body of the core part 11 is not particularly limited; however, a polymer is preferably used. The polymer is not particularly limited; however, silicone (for example, silicone rubber such as solid silicone rubber, liquid silicone rubber, etc.) is preferably used from the viewpoint of suitably forming the core part 11 by a production method described later. The silicone is preferably a cured product of a liquid silicone rubber (for example, a thermosetting liquid silicone rubber, a room temperature curable liquid silicone rubber, etc.), and particularly preferably a cured product of a thermosetting liquid silicone rubber. Commercially available products of thermosetting liquid silicone rubber before curing are as described below.

The silicone may be a cured product of a composition containing a curing agent and a silicone. The curing agent is not particularly limited as long as it can cure the core part 11, and commercially available products of a thermosetting curing agent (hardener) and a photocurable curing agent (photocuring agent) can be used. The curing agent used in the core part 11 may be one which reacts with silicone to be cured, or may be a curing agent which reacts singly to be cured, or may be one which reacts with both of a silicone and a curing agent to be cured.

The material constituting the elastic body of the core part 11 may be of one type or a combination of two or more types.

In the case where the core part 11 is formed of a cured product of a composition containing a curing agent and silicone, a ratio of the curing agent is not particularly limited; however, it is preferably about 0.1 to 20 parts by mass, and more preferably about 0.1 to 10 parts by mass with respect to 100 parts by mass of silicone.

The core part 11 may contain commonly used additives (for example, stabilizers such as an antioxidant and an ultraviolet absorber). The content of the above additives is not particularly limited and can be appropriately adjusted.

A diameter of the core part 11 is not particularly limited; however, it is preferably 900 $\mu$m or less, and more preferably about 100 to 700 $\mu$m from the viewpoint of suitably producing by a microchannel method as described later.

The shell part 12 is formed of a cured product of a composition containing a curing agent and polyimide. The shell part 12 may have a single layer structure or a multilayer (multiple layer) structure. In the core-shell particle 10 of the present invention, the shell part 12 may cover the surface of the core part 11, for example, it may cover the entire surface of the core part 11, or it may partially cover the surface of the core part 11. The shell part 12 preferably covers the substantially entire area (for example, 95% or more, more preferably 99% or more of the surface) of the surface of the core part 11.

The polyimide is not particularly limited, and a solvent-soluble polyimide is used from the viewpoint of producing the core-shell particle 10 by a production method described later. Details of the solvent-soluble polyimide are as described later.

The curing agent is not particularly limited as long as it can cure the shell part 12, and commercially available products of a thermosetting curing agent (hardener) and a photocurable curing agent (photocuring agent), and the like can be used. The curing agent used in the shell part 12 may be one which reacts with polyimide to be cured, or may be a curing agent which reacts singly to be cured, or may be one which reacts with both of a polyimide and a curing agent to be cured. As the curing agent, a thermosetting curing agent is preferably used, and a thermosetting epoxy-based curing agent is more preferably used. As the thermosetting epoxy-based curing agent, one-component type or two-component type commercially available from various manufacturers can be used, but one-component type is more preferred. Examples of commercially available products of the thermosetting epoxy-based curing agents include Scotch Weld series (3M Japan Limited), Denatite series (Nagase ChemteX Corporation), TETRAD series (Mitsubishi Gas Chemical Company, Inc.), and the like. As the curing agent, one type of curing agent may be used alone, or two or more types may be used in combination.

A ratio of the curing agent for forming the shell part 12 is not particularly limited; however, it is preferably about 1 to 20 parts by mass, and more preferably about 5 to 15 parts by mass with respect to 100 parts by mass of polyimide.

The shell part 12 may contain commonly used additives (for example, stabilizers such as an antioxidant and an ultraviolet absorber). The content of the above additives is not particularly limited and can be appropriately adjusted.

A thickness of the shell part 12 is not particularly limited; however, it is preferably 100 $\mu$m or less, and more preferably about 1 to 80 $\mu$m from the viewpoint of ease of production (in particular, suitably producing by a microchannel method as described later).

A particle diameter of the core-shell particle 10 of the present invention is not particularly limited; however, it is preferably 1000 $\mu$m or less, and more preferably about 100 to 800 $\mu$m from the viewpoint of ease of production (in particular, suitably producing by a microchannel method as described later).

In the core-shell particle 10 of the present invention, particularly when the core part 11 is formed of silicone and the shell part 12 is formed of a cured product of a composition containing a thermosetting epoxy-based curing agent and polyimide, the silicone of the core part 11 exerts excellent elasticity and the polyimide of the shell part 12 exerts excellent heat resistance, solvent resistance, insulating properties, mechanical properties, and the like. Further, when the shell part 12 of the core-shell particle 10 of the present invention is formed of a cured product of a composition containing a thermosetting epoxy-based curing agent and polyimide, cracks are hardly produced even when stress is applied, and excellent flexibility is exerted. From these characteristics, the core-shell particle 10 having such composition can be particularly suitably used as an insulating spacer or the like of an electronic device. Further, as described later, by covering the surface of such a core-shell particle 10 with a conductive metal film 13, it is possible to suitably obtain a conductive particles 20 having excellent flexibility.

## 2. Conductive Particle

The conductive particle of the present invention includes a core part, a shell part covering a surface of the core part, and a conductive metal film covering a surface of the shell part, wherein the core part is formed of an elastic body, and the shell part is formed of a cured product of a composition containing a curing agent and polyimide. Hereinafter, the conductive particle of the present invention will be described in detail with reference to Fig. 2.

As shown in Fig. 2, the conductive particle 20 of the present invention includes a core part 11, a shell part 12 covering the surface of the core part 11, and a conductive metal film 13 covering the surface of the shell part.

In the conductive particle 20 of the present invention, the core part 11 and the shell part 12 are the same as those described in the above paragraph "1. Core-Shell Particle". The conductive particle 20 of the present invention is one in which a conductive metal film 13 is formed on the surface of the above-mentioned core-shell particle 10 (for example, the core-shell particle 10 produced by a production method described later). In the conductive particle 20 of the present invention, the conductive metal film 13 may cover the surface of the core-shell particle 10, for example, the conductive metal film 13 may cover the entire surface of the core-shell particle 10, or it may partially cover the surface of the core-shell particle 10. The conductive metal film 13 preferably covers the substantially entire area (for example, 95% or more, more preferably 99% or more of the surface) of the surface of the core-shell particle 10.

The metal constituting the conductive metal film 13 is not particularly limited, and examples thereof include aluminum, copper, nickel, gold, titanium, chromium, silver, palladium, platinum, alloys containing at least one kind of these metals, and the like from the viewpoint of exerting excellent conductivity.

A thickness of the conductive metal film 13 is not particularly limited; however, it is preferably 200 $\mu$m or less, and more preferably about 1 to 150 $\mu$m from the viewpoint of exerting excellent conductivity as fine particles.

A particle diameter of the conductive particle 20 of the present invention is not particularly limited; however, it is preferably 1200 $\mu$m or less, and more preferably about 100 to 1000 $\mu$m from the viewpoint of exerting excellent conductivity as fine particles.

In the conductive particle 20 of the present invention, a particle in which the core part 11 is formed of silicone and the shell part 12 is formed of a cured product of a composition containing a thermosetting epoxy-based curing agent and polyimide, can have the excellent elasticity of the core part 11 and the excellent properties (properties that cracks are hardly produced even when stress is applied and excellent flexibility is exerted) derived from the cured product of a composition containing a thermosetting epoxy-based curing agent and polyimide included in the shell part 12.

The conductive particles 20 of the present invention can be suitably used in electronic components and the like. More specifically, it can be suitably used as a connector or the like arranged between conductive members (for example, between electrodes) on a substrate of an electronic component.

3. Method for Producing Core-Shell Particle

The method for producing the core-shell particle 10 of the present invention is not particularly limited, and publicly known or commonly used methods for producing core-shell particles can be applied. Examples of the method for producing the core-shell particle 10 of the present invention include a method in which particles corresponding to the core part 11 are prepared, and then the shell part 12 is formed on the surface of each of the particles. The above-mentioned particles can be produced by a publicly known or commonly used method such as a polymerization method capable of forming particles, for example, a suspension polymerization method or an emulsion polymerization method, or a method of producing a droplet disclosed in Patent Document 1. Examples of the method of forming the shell part 12 on the surface of the particle include a method of applying a composition containing a curing agent and polyimide onto the above-mentioned particles and curing the composition, and the like.

As a method for producing the core-shell particles 10 of the present invention, a method including at least the following steps 1 and 2 is particularly preferred from the viewpoint of efficiently producing core-shell particles. This method may be hereinafter simply referred to as "production method of the present invention" in some cases.

Step 1: A first oily medium flowing through a first microchannel and a second oily medium flowing through a second microchannel are joined together at a first confluence point of the first microchannel and the second microchannel.

Step 2: Subsequently to the step 1, the first oily medium and the second oily medium flowing through the third microchannel continuing from the first confluence point to the downstream side are discharged into an aqueous medium to form core-shell particles in which the first oily medium constitutes a core part and the second oily medium constitutes a shell part.

In the production method of the present invention, the first oily medium contains the above-mentioned elastic body or a raw material thereof, and the second oily medium contains a polyimide or a monomer for forming a polyimide, and a curing agent.

Further, in the production method of the present invention, in addition to including the steps 1 and 2, a first oily medium, a second oily medium, and an aqueous medium are used in which each of the values of the interfacial tension $\gamma1$ between the first oily medium and the second oily medium, the interfacial tension y2 between the first oily medium and the aqueous medium, and the interfacial tension y3 between the second oily medium and the aqueous medium satisfy the following formulas (1) to (3):

$$\text{Formula (1):} \quad 0 > \gamma1 - (\gamma2 + \gamma3)$$

$$\text{Formula (2):} \quad 0 < \gamma2 - (\gamma1 + \gamma3) < 151$$

$$\text{Formula (3):} \quad 0 > \gamma3 - (\gamma1 + \gamma2)$$

In the three-component system in which the first oily medium, the second oily medium, and the aqueous medium are present, the formula (1) means that the first oily medium and the second oily medium have predetermined wettability. Similarly, the formula (3) means that the second oily medium and the aqueous medium have predetermined wettability. Further, the formula (2) means that the first oily medium and the aqueous medium are hardly to wet and spread.

In general, when a two-phase liquid medium composed of the first oily medium and the second oily medium is discharged into an aqueous medium, the droplet shape is changed so that the surface free energy of the first oily medium and the second oily medium is minimized. For formation of droplets of a two-phase liquid medium, for example, a case where the first oily medium and the second oily medium separately form droplets, a case of forming a droplet in which hemispherical droplets of the first oily medium and the second oily medium are linked with each other, and a case of forming a droplet having a core-shell structure in which one of the first oily medium and the second oily medium constitutes a core part and the other forms a shell part, are possible.

In the production method of the present invention, it is possible to efficiently produce high-quality core-shell particles by including the steps 1 and 2 and by using materials which satisfy the specific relationships of the formulas (1) to (3) as the first oily medium, the second oily medium, and the aqueous medium. More specifically, when a two-phase liquid medium including the first oily medium and the second oily medium is discharged into the aqueous medium to form spherical particles, the surface free energy significantly increases at the interface portion between the first oily medium and the aqueous medium which hardly wet and spread mutually and the interface becomes unstable. At this time, the second oily medium having predetermined wettability with the first oily medium and the aqueous medium becomes spherical so as to cover the first oily medium, and thereby the surface free energy at the time when the two-phase liquid medium forms a spherical shape decreases and stable particles are produced. That is, core-shell particles in which the first oily medium has a core part and the second oily medium has a shell part are produced.

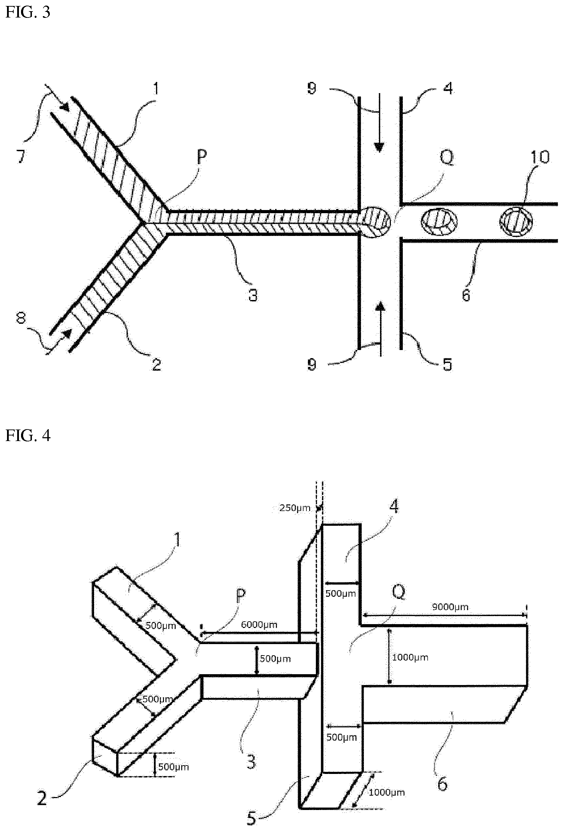

Hereinafter, the production method of the present invention will be described in detail with reference to the schematic views of Fig. 3, Fig. 4, and Fig. 7.

In the production method of the present invention, a so-called microchannel method is used, in which a raw material is supplied into a microchannel (micro flow path) formed in a microchip to produce a target product. For example, in the method for producing core-shell particles using the microchannel method, an oily medium as a raw material of a core part of a core-shell particle and an oily medium as a raw material of a shell part are supplied to a microchannel, and these oily media are discharged into the aqueous medium so that droplets of these oily media are formed in the aqueous medium. At this time, core-shell particles are generated by utilizing the fact that the droplets of the oily media produced in the aqueous medium become spherical particles in which the surface free energy of the droplets is minimized by their own surface tension.

In the production method of the present invention, for example, as shown in Fig. 3, a step 1 of joining a first oily medium 7 (including an elastic body or the raw material thereof) flowing through a first microchannel 1 and a second oily medium 8 (including a polyimide or a monomer for forming a polyimide) flowing through a second microchannel 2 together at a first confluence point P of the first microchannel 1 and the second microchannel 2, is performed. Subsequently to the step 1, the first oily medium 7 and the second oily medium 8 flowing through a third microchannel 3 continuing from the first confluence point P to the downstream side are discharged into an aqueous medium 9, and thereby the core-shell particles 10 in which the first oily medium 7 constitutes the core part, and the second oily medium 8 constitutes the shell part are formed (Step 2).

In the production method of the present invention, in the step 1, the first oily medium 7 and the second oily medium 8 joined at the first confluence point P flows through the third microchannel 3 in a state of two-phase flow. Next, in the step 2, the first oily medium 7 and the second oily medium 8 flowing through the third microchannel 3 are discharged into the aqueous medium 9. At this time, in the production method of the present invention, the values of the interfacial tension $\gamma1$ between the first oily medium 7 and the second oily medium 8, the interfacial tension y2 between the first oily medium 7 and the aqueous medium 9, and the interfacial tension y3 between the second oily medium 8 and the aqueous medium 9 have the specific relationships of the above formulas (1) to (3), respectively, and thereby the core-shell particles 10 in which the first oily medium 7 constitutes the core part, and the second oily medium 8 constitutes the shell part are suitably formed in the aqueous medium 9, and therefore it is possible to efficiently produce high-quality core-shell particles 10.

In the production method of the present invention, from the viewpoint of efficiently producing high-quality core-shell particles 10, it is preferred that $\gamma1$ to y3 satisfy the relationships of the above formulas (1) and (3), and in addition to this, the relationships of the following formulas (1a) and (3a) are further satisfied.

Formula (1a): $0 > \gamma1 - (\gamma2 + \gamma3) > -160$

Formula (3a): $0 > \gamma3 - (\gamma1 + \gamma2) > -160$

In the production method of the present invention, the composition of the first oily medium 7 (including an elastic body or the raw material thereof) and the second oily medium 8 (including polyimide or the monomer forming the polyimide) is not particularly limited as long as it can satisfy the specific relationship of formulas (1) to (3).

As described above, a polymer is preferred as the elastic body for forming the core part 11 of the core-shell particle 10. When the first oily medium 7 contains a polymer, the polymer is not particularly limited; however, silicone (for example, silicone rubber such as solid silicone rubber or liquid silicone rubber etc.) is preferably used from the viewpoint of suitably forming the core part 11 by satisfying the specific relationships of the above formulas (1) to (3). The silicone may be contained as a monomer or oligomer which polymerizes to form a polymer. As the silicone, liquid silicone rubber (for example, thermosetting liquid silicone rubber, room temperature curable liquid silicone rubber, etc.) is preferred, and thermosetting liquid silicone rubber is particularly preferred. By using the thermosetting liquid silicone rubber, a liquid state satisfying the specific relationships of the above formulas (1) to (3) can be suitably kept until core-shell particles are formed in the aqueous medium 9, and then, by heating the core-shell particle, the core part can be suitably cured.

Examples of commercially available products of thermosetting liquid silicone rubber include ELASTOSIL LR series (Wacker Asahikasei Silicone Co., Ltd.), SEMICOSIL series (Wacker Asahikasei Silicone Co., Ltd.), one-component type RTV series (Shin-Etsu Chemical Co., Ltd.), TSE Series (Momentive Performance Materials Japan LLC), and the like.

Each of the polymer or monomer contained in the first oily medium 7 may be of one type or a combination of two or more types. The content of the polymer or monomer contained in the first oily medium 7 is not particularly limited; however, it is preferably about 35 to 95% by mass, and more preferably about 45 to 70% by mass from the viewpoint of efficiently producing high-quality core-shell particles.

In addition, the second oily medium 8 contains polyimide or a monomer (monomer which forms polyimide). That is, in the second oily medium 8, the polyimide may be contained as a monomer which forms polyimide by polymerization.

In the second oily medium 8, the polyimide is not particularly limited, but it is preferred to use a solvent-soluble polyimide. The solvent-soluble polyimide is a polyimide which is soluble in an organic solvent, and preferably one that is soluble in an organic solvent in an amount of 1% by mass or more. As the organic solvent, a common organic solvent can be used, and examples thereof include pentane, normal hexane, cyclohexane, cyclohexanone, benzene, toluene, xylene, chloroform, methyl ethyl ketone, N-methyl-2-pyrrolidone, mixtures of two or more thereof, and the like. By using the solvent-soluble polyimide, a liquid state satisfying the specific relationships of the formulas (1) to (3) can be suitably kept until core-shell particles are formed in the aqueous medium 9.

Examples of commercially available products of the solvent-soluble polyimide include solvent-soluble polyimide solutions (solutions dissolved in an organic solvent) such as SPIXAREA series (SOMAR Corporation), PIAD series (Arakawa Chemical Industries, Ltd.), Solpit 6, 6-PI (Solpit Co., Ltd.), and Q- VR/AD series (PI R&D CO., LTD.).

Each of the polyimide or monomer contained in the second oily medium 8 may be of one type or a combination of two or more types. The content of the polyimide or monomer contained in the second oily medium 8 is not particularly limited; however, it is preferably about 5 to 30% by mass, and more preferably about 5 to 20% by mass from the viewpoint of efficiently producing high-quality core-shell particles.

As described above, the second oily medium contains a curing agent as an essential component. On the other hand, the first oily medium may further contain a curing agent. By containing the curing agent, a liquid state satisfying the specific relationships of the formulas (1) to (3) can be suitably kept until core-shell particles 10 are formed in the aqueous medium 9, and then, by heating the core-shell particles, the core part or the shell part can be suitably cured. In addition, when the second oily medium contains a curing agent, core-shell particles having excellent flexibility can be obtained.

The type of the curing agent is not particularly limited as long as it can cure the core part or the shell part, and a commercially available products of a thermosetting curing agent (hardener) and a photocurable curing agent (photocuring agent), and the like can be used. For example, as a curing agent of the second oily medium containing polyimide or the monomer thereof, a thermosetting curing agent is preferably used, and a thermosetting epoxy-based curing agent is more preferably used. As the thermosetting epoxy-based curing agent, one-component type or two-component type commercially available from various manufacturers can be used, but one-component type is more preferred. Examples of commercially available products of the thermosetting epoxy-based curing agents include Scotch Weld series (3M Japan Limited), Denatite series (Nagase ChemteX Corporation), TETRAD series (Mitsubishi Gas Chemical Company, Inc.), and the like. As the curing agent, one type of curing agent may be used alone, or two or more types may be used in combination.

When the first oily medium 7 contains a curing agent, the content thereof is not particularly limited; however, it is preferably about 0.1 to 20 parts by mass, and more preferably about 0.1 to 10 parts by mass with respect to 100 parts by mass of the polymer or monomer contained in the first oily medium 7 from the viewpoint of efficiently producing high-quality core-shell particles. Further, the content of the curing agent in the second oily medium 8 is not particularly limited; however, it is preferably about 1 to 20 parts by mass, and more preferably about 5 to 15 parts by mass with respect to 100 parts by mass of the polyimide or monomer contained in the second oily medium 8 from the same viewpoint.

In addition, each of the first oily medium 7 and the second oily medium 8 may contain an oily solvent. When using the oily solvent, the interfacial tensions $\gamma 1$ to $\gamma 3$ can be adjusted depending on the type and mixing ratio of the oily solvent, and therefore it is possible to easily satisfy the specific relationships of the above formulas (1) to (3). Further, by using the oily solvent together with, for example, the above-described polymer or polyimide (including monomers for forming polyimide), a liquid state satisfying the specific relationships of the formulas (1) to (3) can be suitably kept until the core-shell particles are formed in the aqueous medium 9, and then, by removing the oily solvent from the core-shell particles, solid core-shell particles can be suitably produced.

As the oily solvent, a common organic solvent can be used, and examples thereof include pentane, normal hexane, cyclohexane, cyclohexanone, benzene, toluene, xylene, chloroform, methyl ethyl ketone, N-methyl-2-pyrrolidone, and the like. As the oily solvent, one type of oily solvent may be used alone, or two or more types may be used in combination.

The content of the oily solvent contained in the first oily medium 7 is not particularly limited; however, it is preferably about 0 to 65% by mass, and more preferably about 5 to 50% by mass from the viewpoint of efficiently producing high-quality core-shell particles. The content of the oily solvent contained in the second oily medium 8 is not particularly limited; however, it is preferably about 70 to 90% by mass, and more preferably about 80 to 90% by mass from the same viewpoint.

Each of the first oily medium 7 and the second oily medium 8 may contain other commonly used additives (for example, stabilizers such as an antioxidant and an ultraviolet absorber). The content of the above additives is not particularly limited and can be appropriately adjusted.

In the production method of the present invention, it is particularly preferred that the first oily medium 7 contains silicone and the second oily medium 8 contains polyimide and a curing agent. From this, it is possible to efficiently produce high-quality core-shell particles in which the core part 11 is formed of silicone, and the shell part 20 is formed of a cured product of a composition containing a curing agent and polyimide. Furthermore, in the production method of the present invention, it is preferred to adjust the interfacial tension between the first oily medium 7 and the second oily medium 8 so as to satisfy the specific relationships of the above formulas (1) to (3) by using the above-mentioned oil solvent for the first oily medium 7 and the second oily medium 8.

The aqueous medium 9 is not particularly limited as long as it can satisfy the specific relationships of the above formulas (1) to (3), and examples thereof include aqueous solutions containing water-soluble components such as polyvinyl alcohol, polyethylene glycol, and polyalkylene oxide.

The water-soluble component is not particularly limited, and those commercially available from various manufacturers can be used. Examples of commercially available products of polyvinyl alcohol include GOHSENOL series (Nippon Synthetic Chemical Industry Co., Ltd.), POVAL series (KURARAY CO., LTD.), POVAL series (JAPAN VAM & POVAL CO., LTD.), DENKA POVAL series (Denka Co., Ltd.), and the like. As the water-soluble component, one type of water-soluble component may be used alone, or two or more types may be used in combination.

In the aqueous medium 9, the content of the water-soluble component contained in the aqueous solution is not particularly limited; however, it is preferably about 0.1 to 10% by mass, and more preferably 1 to about 5% by mass from the viewpoint of efficiently producing high-quality core-shell particles.

From the viewpoint of efficiently producing high-quality core-shell particles in the production method of the present invention, as particularly preferred composition of the first oily medium 7, the second oily medium 8, and the aqueous medium 9, the composition can be mentioned in which the first oily medium 7 is formed of a mixture of silicone and an oily solvent, the second oily medium 8 is formed of a mixture of polyimide, a thermosetting epoxy-based curing agent, and an oily solvent, and the aqueous medium is an aqueous solution containing polyvinyl alcohol.

As described above, in the present invention, in the core-shell particle 10 having the core part 11 formed of silicone and the shell part 12 formed of a cured product of a composition containing a thermosetting epoxy-based curing agent and polyimide, the silicone of the core part 11 exerts excellent elasticity and the polyimide of the shell part 12 exerts excellent heat resistance, solvent resistance, insulating properties, mechanical properties, and the like. In addition, since the shell part 12 is formed of a cured product of a composition containing a curing agent and polyimide, the core-shell particles 10 hardly produce cracking even when a stress is applied, and exerts excellent flexibility.

The interfacial tension $\gamma 1$ between the first oily medium 7 and the second oily medium 8 is not particularly limited as long as it satisfies the above formulas (1) to (3); however, the interfacial tension $\gamma 1$ is preferably more than 0 mN/m and 10 mN/m or less, and more preferably more than 0 mN/m and 5 mN/m or less from the viewpoint of efficiently producing high-quality core-shell particles. Further, the interfacial tension y2 between the first oily medium 7 and the aqueous medium 9 is not particularly limited as long as it satisfies the above formulas (1) to (3); however, the interfacial tension y2 is preferably more than 0 mN/m and 180 mN/m or less, and more preferably about 5 to 160 mN/m from the viewpoint of efficiently producing high-quality core-shell particles. The interfacial tension y3 between the second oily medium 8 and the aqueous medium 9 is not particularly limited as long as it satisfies the above formulas (1) to (3); however, the interfacial tension y3 is preferably more than 0 mN/m and 10 mN/m or less, and more preferably more than 0 mN/m and 5 mN/m or less from the viewpoint of efficiently producing high-quality core-shell particles.

In the production method of the present invention, from the viewpoint of efficiently producing high-quality core-shell particles, it is preferred that the interfacial tension $\gamma1$ between the first oily medium 7 and the second oily medium 8, and the interfacial tension y3 between the second oily medium 8 and the aqueous medium 9 further satisfy the relationship of the following formula (4). From this, in the process of forming the core-shell particles, the second oily medium 8 becomes spherical so as to cover the first oily medium 7, and thereby the surface free energy at the time when the two-phase liquid medium forms a spherical shape is more lowered and stable particles are generated.

$$\text{Formula (4): } \gamma3 > \gamma1$$

In the production method of the present invention, the method of supplying the first oily medium 7 and the second oily medium 8 to the first microchannel 1 and the second microchannel 2, respectively, is not particularly limited, and a method to be used in a publicly known microchannel method can be adopted. As a method used in a publicly known microchannel method, for example, a method using a liquid supply device such as a syringe, a syringe pump, or the like capable of adjusting the flow rate can be mentioned. As a syringe and a syringe pump, commercially available products can be used. Examples of the commercially available products of syringes include Terumo syringes manufactured by Terumo Corporation and gas tight syringes manufactured by Hamilton Company. Examples of the commercially available products of syringe pumps include Legato 100 manufactured by Muromachi Kikai Co., Ltd. and KDS-100 manufactured by KD scientific Inc. The syringe is connected to the microchip using a commercially available tube. As the tube, a tube made of PTFE or the like can be suitably used.

The flow rate of the first oily medium 7 in the first microchannel 1 is not particularly limited; however, it is preferably about 0.1 to 50 ml/hr, more preferably about 0.5 to 30 ml/hr, and still more preferably about 2.5 to 5 ml/hr from the viewpoint of efficiently producing high-quality core-shell particles. The flow rate of the second oily medium 8 in the second microchannel 2 is not particularly limited; however, it is preferably about 0.1 to 50 ml/hr, more preferably about 0.5 to 30 ml/hr, and still more preferably about 2.5 to 5 ml/hr from the same viewpoint.

In addition, in the production method of the present invention, from the viewpoint of efficiently producing high-quality core-shell particles, as shown in Fig. 3, it is preferred to provide, in the portion where the first and second oily media 7 and 8 flowing through the third microchannel 3 are discharged into the aqueous medium 9, the second confluence point Q at which the third microchannel 3, a fourth microchannel 4 through which the aqueous medium 9 flows, and a fifth microchannel through which the aqueous medium 9 flows are joined.

In the production method of the present invention, it is preferred that at the second confluence point Q, the aqueous medium 9 flowing through the fourth microchannel 4 and the aqueous medium 9 flowing through the fifth microchannel 5 are joined together in such a way that the direction in which the aqueous medium 9 flowing through the fourth microchannel 4 flows and the direction in which the aqueous medium 9 flowing through the fifth microchannel 5 flows form an angle of 180° or less.

For example, as shown in Fig. 3, the aqueous medium 9 flowing through the fourth microchannel 4 and the aqueous medium 9 flowing through the fifth microchannel 5 may flow in opposite directions and join together at the second confluence point Q. That is, at the second confluence point Q, the aqueous medium 9 flowing through the fourth microchannel 4 and the aqueous medium 9 flowing through the fifth microchannel 5 may be joined together in such a way that the direction in which the aqueous medium 9 flowing through the fourth microchannel 4 flows and the direction in which the aqueous medium 9 flowing through the fifth microchannel 5 flows form an angle of 180°.

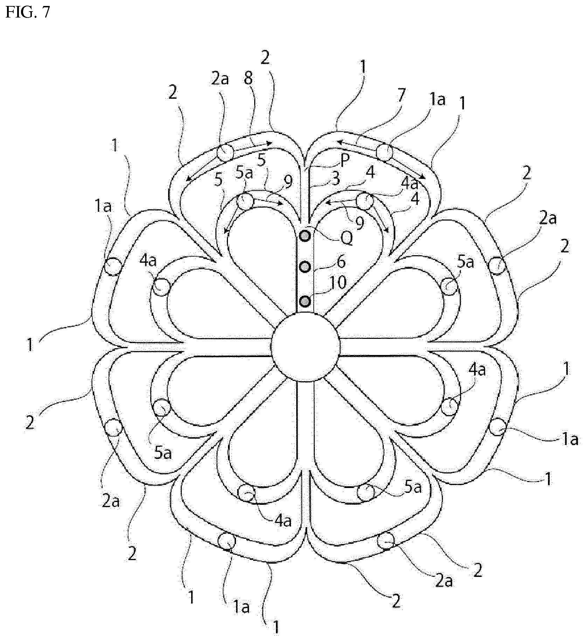

Further, for example, as shown in Fig. 7 described later, at the second confluence point Q, the aqueous medium 9 flowing through the fourth microchannel 4 and the aqueous medium 9 flowing through the fifth microchannel 5 may be joined together in such a way that the direction in which the aqueous medium 9 flowing through the fourth microchannel 4 flows and the direction in which the aqueous medium 9 flowing through the fifth microchannel 5 flows form an angle less than 180°.

As shown in Fig. 3, the first oily medium 7 and the second oily medium 8 are discharged into the aqueous medium 9 at the second confluence point Q (step 2). In the step 2, it is preferred to allow the first oily medium 7 and the second oily medium 8 joined with the aqueous medium 9 at the second confluence point Q to form the core-shell particles while passing through a sixth microchannel 6 continuing from the second confluence point Q to the downstream side.

As a method of supplying the aqueous medium 9 to the fourth and fifth microchannels 4 and 5, as with the first and second oily media 7 and 8, the method used in the above-mentioned publicly known microchannel method can be adopted.

The flow rate of the aqueous medium 9 flowing through the fourth and fifth microchannels 4 and 5 is not particularly limited; however, it is preferably about 30 to 200 ml/hr, and more preferably about 50 to 150 ml/hr from the viewpoint of efficiently producing high-quality core-shell particles. The flow rate of the aqueous medium 9 flowing through the fourth microchannel 4 and the flow rate of the aqueous medium 9 flowing through the fifth microchannel 5 may be different from each other, but these flow rates are preferably comparable with each other (for example, flow rate difference is about -2 to 2 ml/hr) from the viewpoint of efficiently producing high-quality core-shell particles.

In the production method of the present invention, the first microchannel 1, the second microchannel 2, the third microchannel 3 which is a merging channel of these microchannels, the fourth microchannel 4, the fifth microchannel 5, and the sixth microchannel 6 are each a micro flow path formed in a substrate or the like.

In the production method of the present invention, the diameter (direction perpendicular to the longitudinal direction) of the first microchannel 1 is not particularly limited; however, it is preferably about 100 to 900 $\mu$m, and more preferably about 300 to 700 $\mu$m from the viewpoint of efficiently producing high-quality core-shell particles. The diameter (direction perpendicular to the longitudinal direction) of the second microchannel 2 is not particularly limited; however, it is preferably about 100 to 900 $\mu$m, and more preferably about 300 to 700 $\mu$m from the same viewpoint. The diameter (direction perpendicular to the length direction) of the third microchannel 3 is not particularly limited; however, it is preferably about 100 to 900 $\mu$m, and more preferably about 300 to 700 $\mu$m from the same viewpoint.

The diameters (direction perpendicular to the longitudinal direction) of the fourth and fifth microchannels 4 and 5 for supplying the aqueous medium 9 are not particularly limited; however, the diameters are preferably about 300 to 2000 $\mu$m, and more preferably about 500 to 1500 $\mu$m from the viewpoint of efficiently producing high-quality core-shell particles.

Further, the diameter (direction perpendicular to the longitudinal direction) of the sixth microchannel 6 for forming the core-shell particles is not particularly limited; however, it is preferably about 300 to 2000 $\mu$m, and more preferably about 500 to 1500 $\mu$m from the viewpoint of efficiently producing high-quality core-shell particles.

The particle diameter of the core-shell particle produced by the production method of the present invention can be adjusted by the diameter (direction perpendicular to the length direction) of the microchannel, and for example, when the diameters of the first, second, and third microchannels are about 300 $\mu$m, core-shell particles having a particle diameter of about 150 to 250 $\mu$m are obtained, and when the diameters are about 500 $\mu$m, core-shell particles having a particle diameter of about 350 to 450 $\mu$m are obtained, and when the diameters are about 700 $\mu$m, core-shell particles having a particle diameter of about 500 to 650 $\mu$m are obtained.

The length (flow direction) of the first microchannel 1 is not particularly limited; however, it is preferably about 0.1 to 8 mm, and more preferably about 1 to 6 mm from the viewpoint of efficiently producing high-quality core-shell particles. The length (flow direction) of the second microchannel 2 is not particularly limited; however, it is preferably about 0.1 to 8 mm, and more preferably about 1 to 6 mm from the same viewpoint. The length (flow direction) of the third microchannel 3 is not particularly limited; however, it is preferably about 0.1 to 8 mm, and more preferably about 1 to 6 mm from the same viewpoint.

The lengths (flow direction) of the fourth and fifth microchannels 4 and 5 for supplying the aqueous medium 9 are not particularly limited; however, it is preferably about 0.1 to 8 mm, and more preferably about 1 to 6 mm from the viewpoint of efficiently producing high-quality core-shell particles.

The length (flow direction) of the sixth microchannel 6 for forming core-shell particles is not particularly limited; however, it is preferably about 1 to 15 mm, and more preferably about 5 to 10 mm from the viewpoint of efficiently producing high-quality core-shell particles.

In the production method of the present invention, a step 3 of curing the core-shell particles 10 formed in the aqueous medium 9 in the above-mentioned step 2 can be performed. For example, when the first oily medium 7 and the second oily medium 8 contain a thermosetting or photocurable component, the core-shell particles 10 can be cured by heating or photoirradiation.

In the step 3, a step 3-1 of curing the core-shell particles 10 in the aqueous medium 9 may be provided.

In the step 3-1, a heating temperature in the case of thermally curing the core-shell particles in the aqueous medium 9 is not particularly limited as long as it is a temperature equal to or lower than a boiling point of the aqueous medium 9 and at which the core part and the shell part can be cured, and it is preferably about 60 to 98°C. A heating time in the case of thermally curing the core-shell particles in the aqueous medium 9 is not particularly limited; however, it is preferably about 0.1 to 5 hours.

In the step 3-1, the core-shell particles 10 preliminarily cured in the aqueous medium 9 at the heating temperature as described above may be cured (full cured) by further heating at a high temperature. The heating temperature in a full curing is not particularly limited; however, it is preferably about 100 to 200°C. The heating time in the full curing is not particularly limited; however, it is preferably about 0.5 to 8 hours. The full curing in the aqueous medium 9 can be carried out using, for example, a pressure-resistant container or the like.

Further, in the step 3, a step 3-2 of curing the core-shell particles 10 after separating the core-shell particles 10 from the aqueous medium 9 may be provided.

In the step 3-2, a heating temperature in the case of thermally curing the core-shell particles 10 separated from the aqueous medium 9 is not particular limitation as long as it is a temperature at which the oily solvent in the core part and the shell part can be evaporated, and the core part and the shell part can be cured, and the heating temperature is preferably about 100 to 200°C.

Furthermore, the step 3 may include a step of curing the core-shell particles 10 in the aqueous medium 9, and a step 3-2 of further curing (full curing) the core-shell particles 10 after separating the core-shell particles 10 cured (preliminarily cured) in the step 3-1 from the aqueous medium 9.

When the step 3 includes the step 3-1 and the step 3-2, it is preferred that in the step 3-1, heating is performed at a temperature higher than a curing temperature of the core part and lower than a boiling point of the oily solvent contained in the second oily medium 8, and subsequently in the step 3-2, the core-shell particles 10 are heated at a high temperature higher than a curing temperature of the shell part and higher than a boiling point of the oily solvent contained in the first oily medium 7 and the second oily medium 8. From this, first, the core part is cured while maintaining the shell part in a liquid state by the preliminary curing in step 3-1 to enable the oily medium contained in the core part to shift to the shell part in the curing of the core part. Next, in the full curing of the step 3-2, the oily solvent contained in the shell part is evaporated together with the curing of the shell part, and solid-state high quality core-shell particles 10 can be produced.

When thermally curing is carried out in two stages of curing (preliminary curing) in the step 3-1 and curing (full curing) in the step 3-2, the heating temperature in the step 3-1 is preferably about 60 to 98°C, and the heating temperature in the step 3-2 is preferably about 100 to 200°C. The heating times in the preliminary curing and full curing are not particularly limited, and each of the heating times described above can be mentioned, for example.

A method of separating the core-shell particles 10 from the aqueous medium 9 is not particularly limited, and examples thereof include publicly known methods such as filtration and drying.

The core-shell particle 10 of the present invention can also be produced using a microchip, for example as shown in Fig. 7, including a plurality of the first microchannels 1, the second microchannels 2, the third microchannels 3, the fourth microchannels 4, the fifth microchannels 5, the sixth microchannels 6, the first confluence points P, and the second confluence points Q, respectively.

For example, in the microchip shown in Fig. 7, the first oily medium 7 supplied from the supply port 1a of the first oily medium is divided in two directions and flows through the first microchannel 1. Similarly, the second oily medium 8 supplied from the supply port 2a of the second oily medium is also divided in two directions and flows through the second microchannel 2. Thereafter, the first oily medium 7 flowing through the first microchannel 1 and the second oily medium 8 flowing through the second microchannel 2 are joined together at the first confluence point P of the first microchannel 1 and the second microchannel 2. (Step 1). Furthermore, subsequently to the step 1, the first oily medium 7 and the second oily medium 8 flowing through the third microchannel 3 continuing from the first confluence point P to the downstream side are discharged into the aqueous medium 9, and thereby it is possible to form the core-shell particles 10 in which the first oily medium 7 constitutes the core part and the second oily medium 8 constitutes the shell part (step 2).

In the microchip shown in Fig. 7, the aqueous medium 9 supplied from the supply port 4a of the aqueous medium is also divided in two directions and flows through the fourth microchannel 4. Similarly, the aqueous medium 9 supplied from the supply port 5a of the aqueous medium 9 is also divided in two directions and flows through the fifth microchannel 5. Then, as described above, at the second confluence point Q, the aqueous medium 9 flowing through the fourth microchannel 4 and the aqueous medium 9 flowing through the fifth microchannel 5 are joined together in such a way that the direction in which the aqueous medium 9 flowing through the fourth microchannel 4 flows and the direction in which the aqueous medium 9 flowing through the fifth microchannel 5 flows form an angle less than 180°.

In the microchip shown in Fig. 7, the number of the first confluence points P and the number of the second confluence points Q are 8, respectively, and the number of the third microchannels 3 and the number of the sixth microchannels 6 are also 8, respectively.

4. Method for Producing Conductive Particle

The conductive particle 20 of the present invention can be produced by forming a conductive metal film 13 on the surface of the core-shell particle 10 of the present invention (for example, core-shell particles obtained by the production method of the present invention etc.).

A method of forming the conductive metal film 13 on the surface of the core-shell particle 10 is not particularly limited, and a publicly known metal film formation method such as an electroless plating method, a metal vapor deposition method, a sputtering method, or the like can be adopted.

EXAMPLE

Hereinafter, the present invention will be described in detail with reference to examples and comparative examples. However, the present invention is not limited to the examples.

(Evaluation of Flexibility of Core-Shell Particles)

In Example 1 and Comparative Example 1, the obtained particles were sandwiched between spindles and compressed by 30% of the diameter of the particle (distorted up to 70 % of the distorted) using a micrometer NDC-25PX (manufactured by Mitutoyo Corporation), and then the particle surface was observed with an optical microscope.

(Measurement of Interfacial Tension)

In Examples 2 to 7 and Comparative Examples 2 to 3, the interfacial tension $\gamma 1$ between the first oily medium and the second oily medium, the interfacial tension $\gamma 2$ between the first oily medium and the aqueous medium, and the interfacial tension y3 between the second oily medium and the aqueous medium were measured using an automatic contact angle meter DMs-401 manufactured by Kyowa Interface Science Co., Ltd. From these measured values, values of $\gamma 1 - (\gamma 2 + \gamma 3)$, $\gamma 2 - (\gamma 1 + \gamma 3)$, and $\gamma 3 - (\gamma 1 + \gamma 2)$ were calculated. These results are shown in Table 1.

(Checking of Formation of Particles)

In Examples 2 to 7 and Comparative Examples 2 to 3, the state in which a two-phase flow of the first oily medium and the second oily medium flowing through the third microchannel was discharged into the aqueous medium at the second confluence point Q was observed using the high speed camera FASTCAM MAX 120K manufactured by Photron Limited and the appearance of particle formation was checked. As a result, the case where particles having uniform particle diameters were formed was rated as "O", the case where minute particles or precipitates like lints were formed together with the particles were rated as "Δ", and the case where no particles were not formed and bulk precipitates were formed was rated as "×". The results are shown in Table 1.

(Confirmation of Core-Shell Structure of Particle)

In Examples 2 to 7 and Comparative Examples 2 to 3, cross sections of the obtained particles were observed with an electron microscope, and the presence or absence of a core-shell structure was confirmed. The case where the core-shell structure was confirmed was rated as "O", and the case where the core-shell structure was not confirmed was rated as "×". The results are shown in Table 1.

(Example 1)

The same thermosetting liquid silicone rubber was used as both a first oily medium and a second oily medium. As an aqueous medium, an aqueous solution prepared by dissolving 2.0 parts by mass of polyvinyl alcohol (produced by Nippon Synthetic Chemical Industry Co., Ltd., GOHSENOL GL-03) in 98.0 parts by mass of pure water was used.
Using a microchip having a microchannel as shown in Fig. 4, a first oily medium was supplied from the first microchannel 1 at a flow rate of 0.2 ml/hr with a syringe pump (KDS-200 manufactured by KD scientific Inc.). Similarly, a second oily medium was supplied from the second microchannel at a flow rate of 0.2 ml/hr with a syringe pump (KDS-200, manufactured by KD scientific Inc.). Similarly, an aqueous medium was supplied from the fourth microchannel 4 and the fifth microchannel 5 at a flow rate of 100 ml/hr with a syringe pump (KDS-200, manufactured by KD scientific Inc.). The first oily medium 7 flowing through the first microchannel 1 and the second oily medium 8 flowing through the second microchannel 2 are joined together at the first confluence point P of the first microchannel and the second microchannel, and the first oily medium 7 and the second oily medium 8 flowing through the third microchannel 3 continuing from the first confluence point P to the downstream side were discharged into the aqueous medium 9. The first oily medium 7 and the second oily medium 8 joined with the aqueous medium 9 at the second confluence point Q passed through the sixth microchannel 6 while forming a single particle (droplet) of the first oily medium and the second oily medium 8, and was discharged outside the microchip. The discharged single particles and aqueous medium 9 were recovered in a 100 ml glass beaker containing 50.0 g of the aqueous medium 9.
Next, the recovered single particles and aqueous medium 9 were heated at 95°C for 1 hour under still standing to be cured. Next, after removing the aqueous medium by filtration, the cured single particles were washed three times with pure water. Next, the washed single particles were dried at 130°C for 1 hour to obtain core particles.
A solvent of a polyimide solution (PIAD 300 produced by Arakawa Chemical Industries, Ltd.) was distilled off by a reduced pressure drier, 70.0 parts by mass of toluene was added to 30.0 parts by mass of the obtained polyimide solid matter, the resulting mixture was stirred at room temperature for 24 hours to dissolve the mixture, and 2.2 parts by mass of a curing agent (TETRAD-X, produced by Mitsubishi Gas Chemical Company, Inc.) was added and stirred for 5 minutes to prepare a polyimide solution.

The core particles obtained above were immersed in the prepared polyimide solution to adhere the polyimide solution evenly to the particle surfaces, and the core particles were recovered in a 100 ml glass beaker containing 50.0 g of the aqueous medium 9.

The core particles having the polyimide solution adhered to the surface and the aqueous medium 9 were heated at 130°C for 1 hour and then at 180°C for 3 hours in a pressure vessel after distilling off toluene under a reduced pressure of from atmospheric pressure to -90 kPa. Next, after the aqueous medium was removed by decantation, the obtained particles were washed three times with pure water and dried at 50°C for 2 hours to obtain cured core-shell particles. Ten obtained core-shell particles were randomly selected and observed with a microscope, and consequently no problem such as cracking occurred in the shell part of any of the core-shell particles.

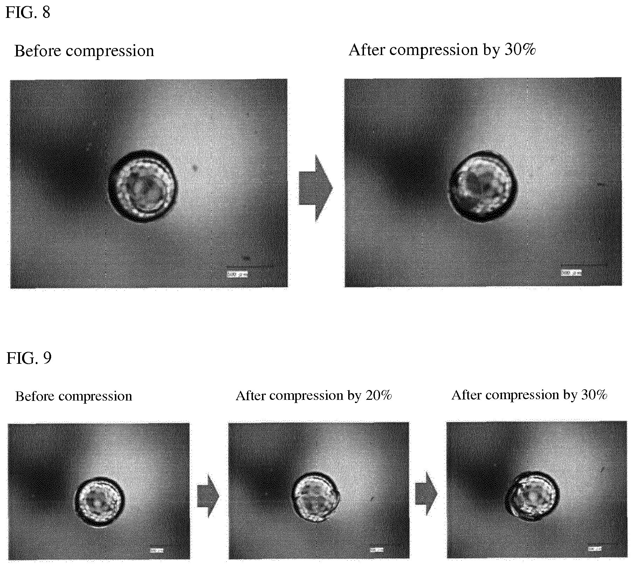

For the core-shell particles obtained in Example 1, the flexibility was evaluated by the above-described method. As a result, the core-shell particle obtained in Example 1 was excellent in flexibility and does not produce cracks on the particle surface. Fig. 8 shows an image obtained by observing core-shell particles before and after compression with a microscope.

(Example 2)

As the first oily medium, a medium obtained by adding 33.4 parts by mass of toluene to 66.6 parts by mass of a thermosetting liquid silicone rubber was used. A solvent of a polyimide solution (PIAD 300 produced by Arakawa Chemical Industries, Ltd.) was distilled off by a reduced pressure drier, 70.0 parts by mass of toluene was added to 30.0 parts by mass of the obtained polyimide solid matter, the resulting mixture was stirred at room temperature for 24 hours to dissolve the mixture, and 2.2 parts by mass of a curing agent (TETRAD-X, produced by Mitsubishi Gas Chemical Company, Inc.) was added and stirred for 5 minutes to prepare a polyimide solution, and the polyimide solution was used as the second oily medium. As an aqueous medium, an aqueous solution prepared by dissolving 2.0 parts by mass of polyvinyl alcohol (produced by Nippon Synthetic Chemical Industry Co., Ltd., GOHSENOL GL-03) in 98.0 parts by mass of pure water was used.

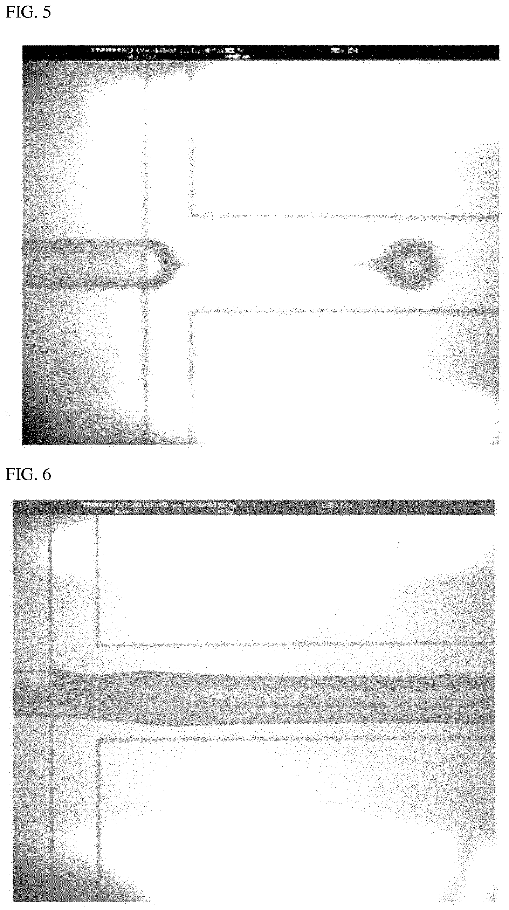

Using a microchip having a microchannel as shown in Fig. 4, a first oily medium was supplied from the first microchannel 1 at a flow rate of 0.2 ml/hr with a syringe pump (KDS-200 manufactured by KD scientific Inc.). Similarly, a second oily medium was supplied from the second microchannel at a flow rate of 0.2 ml/hr with a syringe pump (KDS-200, manufactured by KD scientific Inc.). Similarly, an aqueous medium was supplied from the fourth microchannel 4 and the fifth microchannel 5 at a flow rate of 100 ml/hr with a syringe pump (KDS-200, manufactured by KD scientific Inc.). The first oily medium 7 flowing through the first microchannel 1 and the second oily medium 8 flowing through the second microchannel 2 are joined together at the first confluence point P of the first microchannel and the second microchannel, and the first oily medium 7 and the second oily medium 8 flowing through the third microchannel 3 continuing from the first confluence point P to the downstream side were discharged into the aqueous medium 9. As shown in Fig. 4, the first oily medium 7 and the second oily medium 8 are discharged into the aqueous medium 9 at the second confluence point Q. The first oily medium 7 and the second oily medium 8 joined with the aqueous medium 9 at the second confluence point Q passed through the sixth microchannel 6 while forming core-shell particles and were discharged outside the microchip. The discharged core-shell particles 10 and the aqueous medium 9 were recovered in a 100 ml glass beaker containing 50.0 g of the aqueous medium 9. Fig. 5 shows a photograph of the second confluence point Q. The photographing was carried out using a high speed camera (FASTCAM Mini UX 50 manufactured by Photron Limited) (photographing conditions: 500 fps, skip: 0), and same applies to Fig. 6 described later.

Next, the recovered core-shell particles 10 and the aqueous medium 9 were preliminarily cured by being heated at 95°C for 1 hour under still standing after distilling off toluene under a reduced pressure of from atmospheric pressure to -90 kPa. Next, after removing the aqueous medium by decantation, the core-shell particles were washed three times with pure water. Next, the washed core-shell particles were cured by being heated at 130°C for 1 hour and subsequently at 180°C for 3 hours to obtain cured core-shell particles.

(Examples 3 to 7)

Cured core-shell particles were obtained in the same manner as in Example 2 except that media having composition described in Table 1 were used as the first oily medium, the second oily medium, and the aqueous medium, respectively, and the flow rates of the first oily medium flowing through the first microchannel, the second oily medium flowing through the second microchannel, and the aqueous medium flowing through the fourth and fifth microchannels were set to the values described in Table 1, respectively.

(Comparative Example 1)

Core-shell particles were obtained in the same manner as in Example 1 except that a curing agent (TETRAD-X, produced by Mitsubishi Gas Chemical Company, Inc.) was not added to the polyimide solution. Ten obtained core-shell particles were randomly selected and observed with a microscope, and consequently cracks were produced in the shell part for 6 out of 10 core-shell particles. For the core-shell particles (without cracks in the shell part) obtained in Comparative Example 1, the flexibility was evaluated by the method described above. As a result, the core-shell particles obtained in Comparative Example 1 had low flexibility and produced cracks on the surface of the particles. Fig. 9 shows an image obtained by observing core-shell particles before and after compression with a microscope. As shown in Fig. 9, the core-shell particle obtained in Comparative Example 1 produced cracks on the particle surface even when the particle was compressed by 20% of the diameter.

(Comparative Examples 2 and 3)

Particles were formed in the same manner as in Examples 2 to 7 except that media having composition described in Table 1 were used as the first oily medium, the second oily medium, and the aqueous medium, respectively, and the flow rates of the first oily medium flowing through the first microchannel, the second oily medium flowing through the second microchannel, and the aqueous medium flowing through the fourth and fifth microchannels were set to the values described in Table 1, respectively. In Comparative Examples 2 and 3, no particles were formed at the second confluence point Q, and lumpy (string-like) precipitates were formed. That is, core-shell particles could not be produced. Fig. 6 shows a photograph of the second confluence point Q in Comparative Example 2. Comparative Example 3 was in the same state as Comparative Example 2.

The core-shell particles obtained in Example 1 did not cause failure such as cracking even when stress was applied, and were excellent in flexibility. On the other hand, the core-shell particles obtained in Comparative Example 1 were inferior in flexibility.

[Table 1]

| | Composition of First Oily Medium [parts by mass] | | Composition of Second Oily Medium [parts by mass] | | | Composition of Aqueous Medium [parts by mass] | | Interfacial Tension [mN/m] | | | $\gamma1-(\gamma2+\gamma3)$ | $\gamma2-(\gamma1+\gamma3)$ | $\gamma3-(\gamma1+\gamma2)$ | Flow Rate [ml/hr] | | | Formation of Particle | Formation of Core-Shell Particle |
|---|---|---|---|---|---|---|---|---|---|---|---|---|---|---|---|---|---|---|
| | Liquid Silicone Rubber | Toluene | Polyimide | Toluene | Curing Agent | PVA | Water | $\gamma1$ | $\gamma2$ | $\gamma3$ | | | | First Oily Medium | Second Oily Medium | Aqueous Medium | | |
| Example 2 | 66.6 | 33.4 | 30.0 | 70.0 | 2.2 | 2.0 | 98.0 | 3.1 | 11.4 | 1.2 | -9.5 | 7.1 | -13.3 | 0.2 | 0.2 | 100 | ○ | ○ |
| Example 3 | 50.0 | 50.0 | 30.0 | 70.0 | 2.2 | 2.0 | 98.0 | 3.5 | 9.1 | 1.2 | -6.8 | 4.4 | -11.4 | 0.1 | 0.1 | 100 | ○ | ○ |
| Example 4 | 50.0 | 50.0 | 30.0 | 70.0 | 2.2 | 2.0 | 98.0 | 3.5 | 9.1 | 1.2 | -6.8 | 4.4 | -11.4 | 2.0 | 2.0 | 100 | ○ | ○ |
| Example 5 | 100.0 | 0.0 | 10.0 | 90.0 | 0.7 | 2.0 | 98.0 | 1.5 | 155.4 | 3.3 | -157.2 | 150.6 | -153.6 | 0.1 | 0.1 | 100 | ○ | ○ |
| Example 6 | 100.0 | 0.0 | 10.0 | 90.0 | 0.7 | 2.0 | 98.0 | 1.5 | 155.4 | 3.3 | -157.2 | 150.6 | -153.6 | 0.2 | 0.2 | 100 | ○ | ○ |
| Example 7 | 50.0 | 50.0 | 10.0 | 90.0 | 0.7 | 2.0 | 98.0 | 0.1 | 9.1 | 3.3 | -12.3 | 5.7 | -5.9 | 10 | 10 | 100 | ○ | ○ |
| Comparative Example 2 | 100.0 | 0.0 | 30.0 | 70.0 | 2.2 | 2.0 | 98.0 | 2.3 | 155.4 | 1.2 | -154.3 | 151.9 | -156.5 | 0.1 | 0.1 | 100 | × | - |
| Comparative Example 3 | 100.0 | 0.0 | 30.0 | 70.0 | 5.5 | 2.0 | 98.0 | 2.3 | 155.4 | 1.2 | -154.3 | 151.9 | -156.5 | 0.2 | 0.2 | 100 | × | - |

As is apparent from the results shown in Table 1, in Examples 2 to 7 using the microchip on which the microchannels are formed as shown in Fig. 4 and using the first oily medium, the second oily medium, and the aqueous medium in which the values of the interfacial tensions $\gamma 1$, $\gamma 2$, and $\gamma 3$ satisfy the relationships of the formulas (1) to (3), high-quality core-shell particles could be efficiently produced. On the other hand, in Comparative Examples 2 and 3 in which the microchip having microchannels formed thereon as shown in Fig. 4 similarly to Examples 2 to 7 was used, and the values of $\gamma 1$, y2, and y3 satisfy the relationships of the above formulas (1) and (3) but do not satisfy the relationship of the formula (2), particles were not formed. In addition, in Comparative Examples 2 and 3, since no particles are formed and a core-shell structure is not formed, this is indicated by "-" in Table 1.

DESCRIPTION OF REFERENCE SIGNS

1: First microchannel
1a: Supply port of a first oily medium
2: Second microchannel
2a: Supply port of a second oily medium
3: Third microchannel
4: Fourth microchannel
4a: Supply port of an aqueous medium
5: Fifth microchannel
5a: Supply port of an aqueous medium
6: Sixth microchannel
7: First oily medium
8: Second oily medium
9: Aqueous medium
10: Core-Shell Particle
11: Core part
12: Shell part
20: Conductive Particle
P: First confluence point
Q: Second confluence point

**Claims**

1.  A core-shell particle comprising a core part and a shell part covering a surface of the core part,
    wherein the core part is formed of an elastic body, and
    the shell part is formed of a cured product of a composition containing a curing agent and polyimide.

2.  The core-shell particle according to claim 1, wherein the elastic body is formed of a polymer.

3.  The core-shell particle according to claim 1 or 2, wherein the core has a diameter of 900 $\mu$m or less.

4.  The core-shell particle according to any of claims 1 to 3, wherein the shell has a thickness of 100 $\mu$m or less.

5.  The core-shell particle according to any of claims 1 to 4, wherein the particle diameter is 1000 $\mu$m or less.

6.  A conductive particle comprising a core part, a shell part covering a surface of the core part, and a conductive metal film covering a surface of the shell part,
    wherein the core part is formed of an elastic body, and
    the shell part is formed of a cured product of a composition containing a curing agent and polyimide.

7.  The conductive particle according to claim 6, wherein the elastic body is formed of silicone.

8.  The conductive particle according to claim 6 or 7, wherein a diameter of the core is 900 $\mu$m or less.

9.  The conductive particle according to any of claims 6 to 8, wherein the shell has a thickness of 100 $\mu$m or less.

10. The conductive particle according to any of claims 6 to 9, wherein a thickness of the conductive metal film is 200 μm or less.

11. The conductive particle according to any of claims 6 to 10, wherein a particle diameter is 1200 μm or less.

**Patentansprüche**

1. Core-Shell-Partikel, umfassend einen Kernteil und einen Hüllenteil, der eine Oberfläche des Kernteils bedeckt, wobei der Kernteil aus einem elastischen Körper gebildet ist und der Hüllenteil aus einem gehärteten Produkt einer Zusammensetzung gebildet ist, die einen Härter und ein Polyimid enthält.

2. Core-Shell-Partikel nach Anspruch 1, wobei der elastische Körper aus einem Polymer gebildet ist.

3. Core-Shell-Partikel nach Anspruch 1 oder 2, wobei der Kern einen Durchmesser von 900 μm oder weniger aufweist.

4. Core-Shell-Partikel nach einem der Ansprüche 1 bis 3, wobei die Hülle eine Dicke von 100 μm oder weniger aufweist.

5. Core-Shell-Partikel nach einem der Ansprüche 1 bis 4, wobei der Partikeldurchmesser 1000 μm oder weniger beträgt.

6. Leitfähiges Partikel, umfassend einen Kernteil, einen Hüllenteil, der eine Oberfläche des Kernteils bedeckt, und einen leitfähigen Metallfilm, der eine Oberfläche des Hüllenteils bedeckt, wobei der Kernteil aus einem elastischen Körper gebildet ist und der Hüllenteil aus einem gehärteten Produkt einer Zusammensetzung gebildet ist, die einen Härter und ein Polyimid enthält.

7. Leitfähiges Partikel nach Anspruch 6, wobei der elastische Körper aus Silikon gebildet ist.

8. Leitfähiges Partikel nach Anspruch 6 oder 7, wobei ein Durchmesser des Kerns 900 μm oder weniger beträgt.

9. Leitfähiges Partikel nach einem der Ansprüche 6 bis 8, wobei die Hülle eine Dicke von 100 μm oder weniger aufweist.

10. Leitfähiges Partikel nach einem der Ansprüche 6 bis 9, wobei eine Dicke des leitfähigen Metallfilms 200 μm oder weniger beträgt.

11. Leitfähiges Partikel nach einem der Ansprüche 6 bis 10, wobei ein Partikeldurchmesser 1200 μm oder weniger beträgt.

**Revendications**

1. Particule cœur-coque comprenant une partie cœur et une partie coque recouvrant une surface de la partie cœur, dans laquelle la partie cœur est constituée d'un corps élastique, et la partie coque est constituée d'un produit durci d'une composition contenant un agent de durcissement et du polyimide.

2. Particule cœur-coque selon la revendication 1, dans laquelle le corps élastique est constitué d'un polymère.

3. Particule cœur-coque selon la revendication 1 ou 2, dans laquelle le cœur a un diamètre inférieur ou égal à 900 μm.

4. Particule cœur-coque selon l'une quelconque des revendications 1 à 3, dans laquelle la coque a une épaisseur inférieure ou égale à 100 μm.

5. Particule cœur-coque selon l'une quelconque des revendications 1 à 4, dans laquelle le diamètre des particules est inférieur ou égal à 1000 μm.

6. Particule conductrice comprenant une partie cœur, une partie coque recouvrant une surface de la partie cœur, et un film métallique conducteur recouvrant une surface de la partie coque,
dans laquelle la partie cœur est constituée d'un corps élastique, et
la partie coque est constituée d'un produit durci d'une composition contenant un agent de durcissement et du polyimide.

7. Particule conductrice selon la revendication 6, dans laquelle le corps élastique est constitué de silicone.

8. Particule conductrice selon la revendication 6 ou 7, dans laquelle un diamètre du cœur est inférieur ou égal à 900 $\mu$m.

9. Particule conductrice selon l'une quelconque des revendications 6 à 8, dans laquelle la coque a une épaisseur inférieure ou égale à 100 $\mu$m.

10. Particule conductrice selon l'une quelconque des revendications 6 à 9, dans laquelle une épaisseur du film métallique conducteur est inférieure ou égale à 200 $\mu$m.

11. Particule conductrice selon l'une quelconque des revendications 6 à 10, dans laquelle un diamètre des particules est inférieur ou égal à 1200 $\mu$m.

FIG. 1

10

11

12

FIG. 2

10

11

12

FIG. 3

FIG. 4

FIG. 5

FIG. 6

FIG. 7

FIG. 8

Before compression                    After compression by 30%

FIG. 9

Before compression          After compression by 20%          After compression by 30%

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2002068104 A
- JP 2004197083 A